(19) Europäisches Patentamt
European Patent Office
Office européen des brevets

(11) EP 4 765 215 A1

(12) **EUROPEAN PATENT APPLICATION**

(43) Date of publication:
**24.06.2026 Bulletin 2026/26**

(21) Application number: **25224678.0**

(22) Date of filing: **17.12.2025**

(51) International Patent Classification (IPC):
***H01M 4/04*** (2006.01) ***H01M 10/0525*** (2010.01)

(52) Cooperative Patent Classification (CPC):
**H01M 4/133; H01M 4/0471; H01M 4/1393; H01M 4/622; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.12.2024 KR 20240190252**

(71) Applicant: **SAMSUNG SDI CO., LTD.**
**Yongin-si, Gyeonggi-do 17084 (KR)**

(72) Inventors:
- **YUK, Seoyeon**
  **17084 Yongin-si, Gyeonggi-do (KR)**
- **YANG, Hosung**
  **17084 Yongin-si, Gyeonggi-do (KR)**
- **PARK, Changwon**
  **17084 Yongin-si, Gyeonggi-do (KR)**
- **YOU, Duckjae**
  **17084 Yongin-si, Gyeonggi-do (KR)**
- **WOO, Jiye**
  **17084 Yongin-si, Gyeonggi-do (KR)**

(74) Representative: **Michalski Hüttermann & Partner mbB**
**Kaistraße 16A**
**40221 Düsseldorf (DE)**

(54) **ELECTRODE ASSEMBLY AND RECHARGEABLE LITHIUM BATTERY INCLUDING THE SAME**

(57) An electrode assembly includes an electrode, and a coating layer on the electrode. The coating layer includes nanofibers, and the nanofibers include a polymer including polyamic acid, polyimide, or a combination thereof, and a compound.

FIG. 1

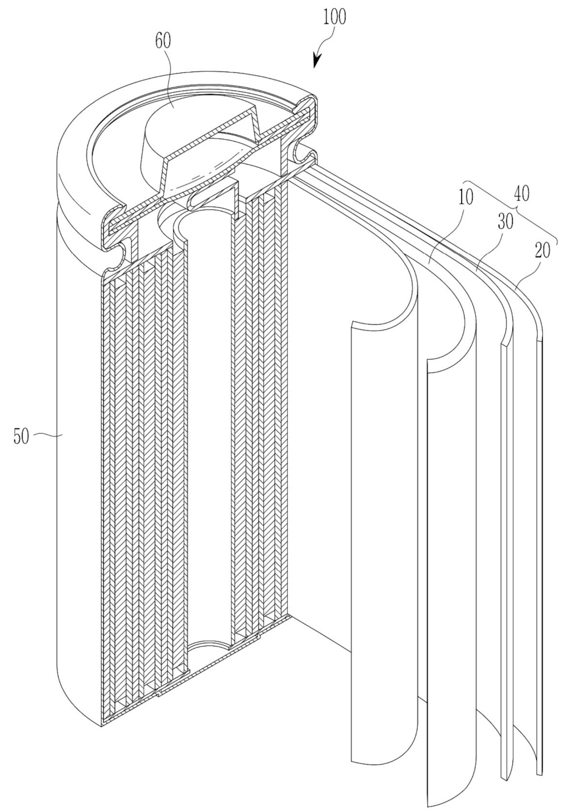


EP 4 765 215 A1

## Description

## BACKGROUND

### 1. Field

The present disclosure relates to an electrode assembly, and to a rechargeable lithium battery including the electrode assembly.

### 2. Description of the Related Art

With increasing presence of electronic devices that use batteries, such as, e.g., mobile phones, laptop computers, electric vehicles, and the like, the demand for rechargeable batteries with high energy density and high capacity is increasing. Accordingly, improving the performance of rechargeable lithium batteries may be advantageous.
Rechargeable lithium batteries include a positive electrode and a negative electrode including an active material capable of intercalating and deintercalating lithium ions, and an electrolyte solution, and generate electrical energy through oxidation and reduction reactions when lithium ions are intercalated and deintercalated from the positive electrode and the negative electrode.

## SUMMARY

Some example embodiments include an electrode assembly having desired or improved electrospinning properties, a method of manufacturing the electrode assembly, and a rechargeable lithium battery including the electrode assembly having improved battery characteristics by controlling the permittivity and electrical conductivity of an electrospinning solution.
An electrode assembly according to some example embodiments includes an electrode, and a coating layer on the electrode. The coating layer includes nanofibers, and the nanofibers include at least one of a polymer including polyamic acid, polyimide, or a combination thereof, and a compound represented by Chemical Formula 1 below.

Chemical Formula 1:

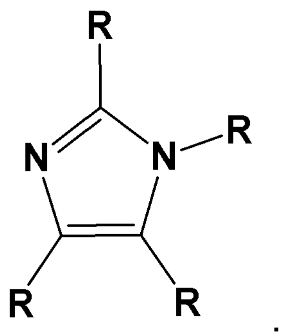

In Chemical Formula 1, $R_1$ to $R_4$ each independently is or includes at least one of hydrogen, a C1 to C20 alkyl group, or a combination thereof.
A rechargeable lithium battery according to some example embodiments includes the electrode assembly, and an electrolyte.
The electrode assembly according to some example embodiments may improve electrospinning properties by controlling the permittivity and electrical conductivity of an electrospinning solution, and a rechargeable lithium battery including the electrode assembly can have improved battery characteristics.

## BRIEF DESCRIPTION OF THE DRAWINGS

FIGS. 1 to 4 are schematic view showing rechargeable lithium batteries, according to some example embodiments.
FIG. 5 is a graph showing the measured permittivity of electrospinning solution "a" and electrospinning solution "b."
FIG. 6 is a graph showing the electrical conductivity of electrospinning solution "a" and electrospinning solution "b."

FIG. 7 is a graph showing the permittivity measured for the electrospinning solutions prepared in Example 1, Example 2, Comparative Example 1, and Comparative Example 4.

FIG. 8 is a graph showing the electrical conductivity of the electrospinning solutions manufactured in Example 1, Example 2, Comparative Example 1, and Comparative Example 4.

FIG. 9 is a graph showing the imide index measured according to the imidization temperature of the electrospinning solutions prepared in Example 1 and Comparative Example 1.

FIG. 10 is a scanning electron microscope (SEM) image of the surface of the coating layer on the negative electrode manufactured in Example 1.

FIG. 11 is a scanning electron microscope (SEM) image of the surface of the coating layer on the negative electrode manufactured in Comparative Example 1.

FIG. 12 is an image of a coating layer manufactured by electrospinning the electrospinning solution prepared in Comparative Example 1 with a single nozzle on a silver Al foil.

FIG. 13 is an image of a coating layer produced by electrospinning the electrospinning solution prepared in Example 1 onto a silver Al foil with a single nozzle.

FIG. 14 is an image of a coating layer produced by electrospinning the electrospinning solution prepared in Comparative Example 1 using a multi-nozzle onto a black negative electrode plate.

FIG. 15 is an image of a coating layer produced by electrospinning the electrospinning solution prepared in Example 1 using a multi-nozzle onto a black negative electrode plate.

FIG. 16 is a flow chart illustrating a method of manufacturing an electrode assembly, according to an example embodiment.

**DETAILED DESCRIPTION**

Hereinafter, example embodiments are described in detail. However, these embodiments are presented as an example, and the present disclosure is not limited thereto, and the present disclosure is defined by the scope of the claims described below.

As used herein, when a specific definition is not otherwise provided, layer, it is understood that when an element such as a layer, film, region, or substrate is referred to as being "on" another element, the element can be directly on the other element, or intervening elements may also be present therebetween.

Unless otherwise specified in this specification, what is indicated in the singular may also include the plural. In addition, unless otherwise specified, "A or B" may mean "including A, including B, or including A and B."

As used herein, "combination thereof" indicates a mixture, a laminate, a composite, a copolymer, an alloy, a blend, a reaction product, and the like of the constituents.

As used herein, when a definition is not otherwise provided, the particle diameter may be an average particle diameter. In addition, the particle diameter may refer to an average particle diameter ($D_{50}$), which means the diameter of particles having a cumulative volume of 50 volume% in the particle size distribution. The average particle diameter ($D_{50}$) may be measured by a method known to those skilled in the art, for example, by a particle size analyzer, or by a transmission electron microscope image, or a scanning electron microscope image. Alternatively, a dynamic light-scattering measurement device is used to perform a data analysis, and the number of particles is counted for each particle size range. From this, the average particle diameter ($D_{50}$) value may be readily obtained through a calculation. Alternatively, the average particle diameter ($D_{50}$) value can be measured using a laser diffraction method. When measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter ($D_{50}$) on the basis of 50% of the particle diameter distribution in the measuring device.

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

<u>Electrode Assembly</u>

The electrode assembly according to some example embodiments includes an electrode, and a coating layer on the electrode. The coating layer includes nanofibers, and the nanofibers includes a polymer including at least one of polyamic acid, polyimide, or a combination thereof, and a compound represented by Chemical Formula 1 below.

Chemical Formula 1:

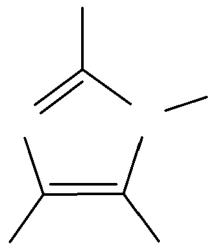

.

In Chemical Formula 1, $R_1$ to $R_4$ each independently is or includes at least one of hydrogen, a C1 to C20 alkyl group, or a combination thereof.

For example, the electrode may include a current collector, and an electrode active material layer on the current collector, wherein the coating layer may be disposed on the electrode active material layer and may be integrated with the electrode active material layer.

The coating layer may constitute a separator between the positive and negative electrodes to reduce or prevent short circuits, and thus, a rechargeable lithium battery according to some example embodiments may not include a separate separator. In this way, because the rechargeable lithium battery according to some example embodiments does not include a separate separator, the separator can be omitted during manufacturing. In addition, because there may be no need to perform a lamination process to combine the separator and the electrode, the battery can be manufactured economically, and the energy density may be increased while reducing the volume of the battery.

In some example embodiments, a battery may be manufactured by stacking an electrode and a counter electrode so that the active material layer of the counter electrode is in contact with the coating layer to manufacture an electrode assembly, inserting the electrode assembly into a battery case, and then injecting an electrolyte solution.

As another example, both the positive and negative electrodes may be manufactured by forming a coating layer according to some example embodiments, stacking the positive and negative electrodes so that the respective coating layers are in contact with each other to form an electrode assembly, inserting the stacked positive and negative electrodes into a case, and then injecting an electrolyte solution to manufacture a battery.

As another example, an all-solid-state rechargeable battery may be manufactured by stacking, e.g., sequentially stacking, the electrode and a counter electrode on the coating layer.

Meanwhile, while using an electrode according to some example embodiments, a separator may be separately interposed between the positive and negative electrodes depending on the required specifications.

In various example embodiments, the coating layer may be integrated with the electrodes to implement strong adhesiveness while implementing desired or improved air permeability and physical strength between the positive and negative electrodes, and may effectively perform a role of isolating the two electrodes even with a thin thickness, and may improve cycle-life characteristics of the battery by reducing or preventing the growth of lithium dendrites formed during charge and discharge.

In addition, the fact that the coating layer is integrated with the electrode active material layer may refer to a state in which a portion of the coating layer components permeates the electrode active material layer by directly forming the coating layer on the electrode active material layer using an electrospinning manner, and may refer to a region in which the electrode active material layer components and the coating layer components are mixed with each other at the interface between the electrode active material layer and the coating layer.

According to some example embodiments, the electrode may more firmly bond the electrode active material layer and the coating layer, and exhibit higher adhesiveness compared to cases where a coating layer is formed on an electrode active material layer using a general coating method or where the coating layer is separately manufactured in a film form and then stacked on the electrode active material layer.

In this way, the fact that the coating layer is integrated with the electrode active material layer may be clearly seen when a cross-section of the electrode assembly is photographed using a scanning electron microscope (SEM), and the like, and although the electrode active material layer and the coating layer are distinguishable, the interface (boundary portion) between the electrode active material layer and the coating layer may appear uneven (unflat), or a region where the components of the electrode active material layer and the components of the coating layer are mixed may appear with a given thickness at the interface between the electrode active material layer and the coating layer.

In addition, because the electrode active material layer and the coating layer are integrated, the electrode active material layer and the coating layer are in close contact with each other, so that the interface between the electrode active

material layer and the coating layer may be formed in a dense form without pores.

In this way, because the coating layer is integrated with the electrode active material layer, the coating layer may exist in a more firmly bonded state with the electrode active material layer. Accordingly, the physical strength and durability of the battery are improved, and the processability may be improved, as problems of each layer detaching or slipping do not occur during the battery manufacturing process.

In general, when the electrospinning properties of an electrospinning solution (dope) is not good, the electrospinning solution does not spin in the form of fibers, causing the electrospinning film to become wet or the electrospinning solution to drop (and form droplets), which may pose a challenge in that the function of the coating layer formed by electrospinning may be reduced.

Accordingly, the electrode assembly according to some example embodiments may include a coating layer having desired or improved properties such as strength and adhesiveness by controlling the properties of the electrospinning solution itself to significantly improve the electrospinning properties of the electrospinning solution.

According to some example embodiments, the coating layer includes nanofibers, wherein the nanofibers include a polymer including at least one of polyamic acid, polyimide, or a combination thereof.

The polyamic acid may be or include a compound having a carboxyl group (-COOH), in which case the carboxyl group of the polyamic acid may react with the imidazole compound described below to improve the permittivity and electrical conductivity of the electrospinning solution.

For example, the polymer may be included in an amount in a range of about 90 wt% to about 99.9 wt%, for example, about 90 wt% to about 99 wt%, about 90 wt% to about 95 wt%, or about 95 wt% to about 99 wt% based on 100 wt% of the coating layer. When the above range of polymer amount is satisfied, the permittivity and electrical conductivity of the electrospinning solution are improved, so that a coating layer having desired or improved electrospinning properties and desired or improved mechanical strength and adhesiveness may be formed.

For example, the polyimide may be included in an amount greater than or equal to about 70 wt%, for example, greater than or equal to about 80 wt%, greater than or equal to about 90 wt%, or greater than or equal to about 95 wt%, based on 100 wt% of the polymer. When the above range of polyimide amount is satisfied, an electrode assembly including a coating layer having desired or improved mechanical strength and desired or improved adhesiveness due to a high imidization rate may be formed.

For example, the polymer may further include other polymers having a carboxyl group (-COOH), and for example, the other polymers may include at least one of poly(methacrylic acid), poly(acrylic acid), poly(maleic acid), poly(butadiene acid), or a combination thereof.

The coating layer according to some example embodiments includes nanofibers, wherein the nanofibers include a compound represented by Chemical Formula 1 below.

Chemical Formula 1:

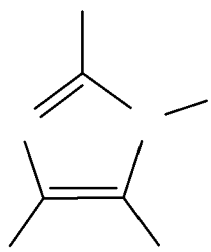

.

In Chemical Formula 1, $R_1$ to $R_4$ each independently is or includes at least one of hydrogen, a C1 to C20 alkyl group, or a combination thereof.

The compound represented by Chemical Formula 1 may be or include an imidazole-based compound. The imidazole-based compound may be or include base catalysts added to the electrospinning solution, and may be electrospun together with the polymer to be included in a coating layer according to some example embodiments.

In the imidazole-based compound, the nitrogen atom having an unshared electron pair may react with the hydrogen of the carboxyl group (-COOH) included in the aforementioned polymer and be ionized, thereby forming an imidazolium salt. Through this reaction, the permittivity and electrical conductivity of the electrospinning solution may be improved, and when the electrospinning solution is electrospun, the electrospinning properties may be significantly improved.

For example, in Chemical Formula 1, $R_1$ to $R_4$ may each independently be or include at least one of hydrogen, a

C1 to C5 alkyl group, or a combination thereof. As an example, $R_1$ to $R_4$ may each independently be or include at least one of hydrogen, a C1 to C3 alkyl group, or a combination thereof. As another example, all of $R_1$ to $R_4$ may be or include hydrogen. The compound represented by Chemical Formula 1 may not have an aromatic substituent.

For example, the compound represented by Chemical Formula 1 may include at least one of imidazole, 1-methylimidazole, 1-ethylimidazole, 2-methylimidazole, 4-methylimidazole, 1,2-dimethylimidazole, 2-ethyl-4-methylimidazole, or a combination thereof.

For example, the compound represented by Chemical Formula 1 may be or include a monomer compound rather than a polymer, and may have a relatively small molecular weight or molecular size and high fluidity compared to a polymer compound. Accordingly, the compound represented by Chemical Formula 1 may more readily react with and ionize the carboxyl group included in the aforementioned polymer, and thus may better perform the role thereof as a base catalyst.

For example, the coating layer may be formed by electrospinning. When the coating layer is formed in a film form by simply spinning the spinning solution, it may be advantageous for the permittivity of the spinning solution to be low in order to reduce or prevent static electricity from being generated in the manufactured film. The coating layer according to some example embodiments is formed by electrospinning an electrospinning solution having high permittivity and electrical conductivity, and therefore may have improved or superior mechanical strength and adhesiveness compared to a coating layer formed in a film formed by simple spinning.

For example, the compound represented by Chemical Formula 1 may be included in an amount in a range of about 0.1 wt% to about 10 wt%, for example, about 0.5 wt% to about 7.5 wt%, or about 1 wt% to about 5 wt% based on 100 wt% of the coating layer. When the amount of the compound is in the above range, the permittivity and electrical conductivity of the electrospinning solution are improved, so that a coating layer having desired or improved electrospinning properties and desired or improved mechanical strength and adhesiveness may be formed.

For example, for the coating layer, the polymer and the compound represented by Chemical Formula 1 may be included in a weight ratio in a range of about 95:5 to about 99.9:0.1, for example, a weight ratio of about 99:1 to about 99.5:0.5, or a weight ratio of about 99.5:0.5 to about 99.9:0.1. When the above range of weight ratio is satisfied, the permittivity and electrical conductivity of the electrospinning solution are improved, so that a coating layer having desired or improved electrospinning properties, mechanical strength, and adhesiveness may be formed.

For example, the coating layer formed by electrospinning includes nanofibers, and the nanofibers may have a three-dimensional network structure, for example, a woven structure or a non-woven structure. Accordingly, when the nanofibers have a three-dimensional network structure, for example, a woven structure or a non-woven structure, there may be an advantage of minimizing Li ion movement resistance.

For example, the average diameter of the nanofibers may be in a range of about 50 nm to about 500 nm, for example about 50 nm to about 300 nm, about 50 nm to about 100 nm, or about 60 nm to about 100 nm. When the above numerical range is satisfied, the coating layer may exhibit desired or improved air permeability, adhesiveness, and mechanical strength.

The diameter of the nanofiber may refer to the widest diameter among the fiber diameters measured based on the cross-section of each nanofiber, and may be measured in a direction perpendicular to the longitudinal direction of the nanofiber. The average diameter of the above nanofibers may be calculated by randomly measuring the cross-sectional diameters of about 20 fibers in a scanning electron microscope image of the surface of the coating layer, and then calculating the arithmetic mean thereof.

The existence of nanofibers in a three-dimensional network structure may indicate a porous structure including multiple pores.

For example, the average diameter of the pores included in the nanofibers may be in a range of about 50 nm to about 500 nm, for example about 50 nm to about 300 nm, about 50 nm to about 100 nm, or about 60 nm to about 100 nm. When the above range of the average diameter is satisfied, the coating layer may exhibit desired or improved air permeability, adhesiveness, and mechanical strength by having pores of a substantially uniform appropriate size.

The pore diameter refers to a diameter of an individual pore included in a nanofiber having a three-dimensional network structure, and the longest axis crossing the cross-section of the pore may be defined as the diameter. The average diameter of the pores may mean a value obtained by measuring the cross-sectional diameters of about 20 pores in an SEM image of the surface of the coating layer, and calculating the arithmetic mean thereof.

For example, a thickness of the coating layer may be in a range of about 1 $\mu$m to about 25 $\mu$m, for example, greater than or equal to about 5 $\mu$m, or greater than or equal to about 8 $\mu$m, and less than or equal to about 20 $\mu$m, less than or equal to about 15 $\mu$m, or less than or equal to about 10 $\mu$m. When the thickness of the coating layer is within the above range, an appropriately high density may be exhibited, and thus the formation of Li dendrites during charge and discharge may be more effectively reduced or suppressed.

Method for Manufacturing Electrode Assembly

A method for manufacturing an electrode assembly according to some example embodiments includes

preparing an electrospinning solution including a pre-polymer including polyamic acid, a compound represented by Chemical Formula 1, and a solvent, electrospinning the electrospinning solution onto an electrode surface, and heat-treating the electrospinning solution to form a coating layer.

For example, the electrospinning solution may be prepared by first dissolving the pre-polymer in the solvent, then adding the compound represented by Chemical Formula 1, and stirring. The stirring may utilize a commonly used method, and for example, stirring may be performed using a paint mixer. In this case, a high viscosity solution may be mixed quickly, and mixing may be performed effectively by simultaneously or contemporaneously using vibration and rotation.

For example, the pre-polymer may be an intermediate before being finally polymerized into the aforementioned polymer, and may be converted into the polymer through an additional polymerization or curing process.

The pre-polymer may include a polyamic acid having a carboxyl group (-COOH), in which case the carboxyl group of the polyamic acid may react with an imidazole compound described below to improve the permittivity and electrical conductivity of the electrospinning solution.

In addition to the polyamic acid, the pre-polymer may further include other polymers having a carboxyl group (-COOH), and in this case, the imidazole compound and the carboxyl group of the other polymer may react to improve the permittivity and electrical conductivity of the electrospinning solution. For example, the other polymer may include at least one of poly(methacrylic acid), poly(acrylic acid), poly(maleic acid), poly(butadiene acid), poly(methyl methacrylate acid), or a combination thereof.

The pre-polymer may be included in an amount in a range of about 5 wt% to about 20 wt%, for example, about 5 wt% to about 15 wt%, about 5 wt% to about 10 wt%, or about 10 wt% to about 15 wt% based on 100 wt% of the electrospinning solution.

The compound represented by Chemical Formula 1 may be included in an amount in a range of about 0.1 wt% to about 5 wt%, for example, about 0.1 wt% to about 2.5 wt%, about 0.1 wt% to about 1 wt%, about 0.5 wt% to about 1 wt%, or about 0.1 wt% to about 0.5 wt% based on 100 wt% of the electrospinning solution.

When the pre-polymer and the compound represented by Chemical Formula 1 are included within the above numerical range, the permittivity and electrical conductivity of the electrospinning solution are improved, so that a coating layer having desired or improved electrospinning properties, mechanical strength, and adhesiveness may be implemented.

For example, the solvent included in the electrospinning solution may include at least one of dimethylacetamide, dimethyl acetate, dimethylformamide, dimethyl sulfoxide, acetone, or a combination thereof.

For example, a viscosity of the pre-polymer may be in a range of about 8000 mPa·s to about 9900 mPa·s, for example about 9000 mPa·s to about 9900 mPa·s, or about 9000 mPa·s to about 9500 mPa·s. When the above range of viscosity is satisfied, a coating layer with desired or improved electrospinning properties and mechanical strength may be formed by using an electrospinning solution having an appropriate range of permittivity and electrical conductivity.

The viscosity of the pre-polymer may be measured at 25 °C using a rotational rheometer (iQ Rheometer, HAAKE), wherein a zero-shear viscosity is determined from a shear rate sweep performed in a range of 0.1 $s^{-1}$ to 1000 $s^{-1}$.

For example, the permittivity of the electrospinning solution may be in a range of about 70 pF/m to about 100 pF/m, for example about 70 pF/m to about 90 pF/m, or about 75 pF/m to about 80 pF/m.

For example, the electrical conductivity of the electrospinning solution may be in a range of about 2000 μS to about 8000 μS, for example, about 2000 μS to about 5000 μS, about 2000 μS to about 4000 μS, or about 3000 μS to about 4000 μS.

The permittivity and the electrical conductivity of the electrospinning solution may be measured simultaneously at 25 °C using a rheometer (MCR 703, Anton Paar) by applying an alternating current signal, and values measured at a frequency of 50 Hz among frequencies of 50 Hz, 1 kHz, 20 kHz, 50 kHz, and 100 kHz may be used.

When the permittivity and electrical conductivity of the electrospinning solution satisfy the above numerical ranges, a coating layer having desired or improved electrospinning properties and desired or improved mechanical strength and adhesiveness can be formed.

In an example, a method for manufacturing an electrode assembly according to some example embodiments includes electrospinning the electrospinning solution onto an electrode surface.

The electrospinning process may be performed by disposing one nozzle pack consisting of a tip having a hole size of about 23G (gauge) to about 30G and a collector roller at a predetermined interval, adding the electrospinning solution to the tip, disposing the target material on the contact roller, and then applying a voltage in a range of about 35 kV to about 100 kV to the tip.

The number of the above tips can be appropriately adjusted depending on the type and content of the polymer included in the electrospinning solution, and may be, for example, in a range of about 1 to about 1,000.

The predetermined distance between the nozzle pack and the target substrate may be in a range of about 10 cm to about 20 cm.

When the hole size of the tip is in a range of about 25G to about 30G, it is suitable because a coating layer of a desired shape may be formed.

According to the electrospinning process, a polymer solution is spun into a fiber shape and stretched, and then spun onto a target substrate in the form of nanofibers, thereby forming a coating layer.

To explain this in more detail, the electrospinning solution is suspended in the form of a droplet at the tip due to surface tension, and when voltage is applied, charges are accumulated on the surface of the electrospinning solution droplet, and a repulsive force occurs between the charges. Accordingly, the repulsive force among the charges is directed in an opposite direction to surface tension of the solution, and when the voltage reaches a threshold point, a Taylor cone is formed, and from the tip end of the Taylor cone, the polymer solution is jetted, and goes through multi-axial stretching in a whipping region, and nanofibers are collected into a non-woven fabric by the collector roller to form an organic layer a coating layer.

At this time, the electrospinning process may be performed under conditions of a temperature in a range of about 20 °C to about 30 °C and a relative humidity in a range of about 0% to about 60%. When the electrospinning process is performed under the above temperature and relative humidity conditions, there may be an advantage of keeping the fibers to have a predetermined thickness, while spinning.

In addition, a rolling speed of the collector roller may be adjusted to secure an appropriate thickness of the coating layer, for example, in a range of about 0.1 m/min to about 3 m/min. Furthermore, the electrospinning solution may be adjusted to be discharged from the tips at a flow rate in a range of about 1 ml/min to about 100 ml/min.

In addition, interference among the tips may be minimized to secure substantially uniform electrospinning by appropriately controlling tip air. The tip air may be controlled by flowing compressed air at a pressure in a range of about 0.01 MPa to about 0.5 MPa.

For example, the electrospinning process may be performed about twice or more.

As nanofibers are formed by electrospinning, the formed nanofibers may have a three-dimensional network structure. As the coating layer is formed by an electrospinning process, the solvent may be readily volatilized, which is suitable because the spring back phenomenon in which the solvent damages the electrode may be better reduced or suppressed.

Next, the method for manufacturing an electrode assembly according to some example embodiments includes heat-treating the electrospun electrospinning solution to form a coating layer.

The heat-treating may be a process in which the pre-polymer undergoes a polymerization reaction or a curing reaction, and as an example, may be a process in which a pre-polymer including polyamic acid undergoes thermal imidization to produce polyamic acid.

For example, the heat-treating temperature may be in a range of about 200 °C to about 400 °C, for example about 200 °C to about 350 °C, about 200 °C to about 300 °C, or about 200 °C to about 250 °C.

For example, the electrospinning solution may constitute a low-temperature reaction accelerator that allows the pre-polymer to react at a low temperature by including a compound represented by Chemical Formula 1. For example, the compound represented by Chemical Formula 1 may lower the temperature at which the polyamic acid is imidized, and as a result, thermal imidization may be possible at a relatively low temperature in a range of about 200 °C to about 400 °C. When thermally imidized at low temperatures, an electrode assembly that includes a coating layer having desired or improved mechanical strength and improved electrospinning properties while minimizing deformation of the electrode is formed.

For example, the boiling point of the compound represented by Chemical Formula 1 may be greater than about 200 °C and less than or equal to about 400 °C, for example, in a range of about 250 °C to about 400 °C, about 250 °C to about 350 °C, about 250 °C to about 300 °C, or about 250°C to about 260°C. When the above range of boiling point temperature is satisfied, the compound represented by Chemical Formula 1 may continue to act as a low-temperature reaction accelerator even during the heat treatment process, and may remain in the coating layer even after the heat-treating, making detection possible.

After forming the coating layer, further roll pressing may be performed. The roll press process may be performed at a temperature in a range of about 25 °C to about 110 °C. When the roll press process is further performed, the coating layer is compressed, which may have the advantage of shortening the Li ion movement path and improving the movement of lithium ions during charging and discharging. In addition, by additionally performing the roll press process, the coating layer and the electrode active material layer may be more effectively integrated.

## Rechargeable Lithium Battery

According to some example embodiments, a rechargeable lithium battery includes the aforementioned electrode assembly, and an electrolyte.

The electrode assembly may include a positive electrode assembly, a negative electrode assembly, or a combination thereof.

The positive electrode assembly may include a positive electrode and the coating layer on the positive electrode, and the negative electrode assembly may include a negative electrode and the coating layer on the negative electrode.

As an example, the positive electrode assembly may include a positive electrode current collector, a positive

electrode active material layer on the positive electrode current collector, and a coating layer disposed on the positive electrode active material layer and integrally formed with the positive electrode active material layer. As an example, the negative electrode assembly may include a negative electrode current collector, a negative electrode active material layer on the negative electrode current collector, and a coating layer disposed on the negative electrode active material layer and integrally formed with the negative electrode active material layer.

The rechargeable lithium battery may be classified into cylindrical, prismatic, pouch, coin, and the like depending on its shape. FIGS. 1 to 4 are schematic views showing the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electric path for inducing the current formed in the electrode assembly 40 to the outside of the battery 100.

The rechargeable lithium battery according to some example embodiments may be applicable to, e.g., automobiles, mobile phones, and/or various types of electrical devices, but the present disclosure is not limited thereto.

Hereinafter, the configuration of a rechargeable lithium battery is described in detail.

## Positive Electrode

The positive electrode for a rechargeable lithium battery may include a current collector, and a positive electrode active material layer formed on the current collector. The positive electrode active material layer includes a positive electrode active material, and may further include a binder and/or a conductive material.

For example, the positive electrode may further include an additive that can constitute a sacrificial positive electrode.

The positive electrode active material may be or include a compound (lithiated intercalation compound) capable of intercalating and deintercalating lithium. For example, at least one composite oxide of lithium and a metal such as or including at least one of cobalt, manganese, nickel, and combinations thereof may be used.

The composite oxide may be or include a lithium transition metal composite oxide, and examples thereof include at least one of a lithium nickel-based oxide, a lithium cobalt-based oxide, a lithium manganese-based oxide, a lithium iron phosphate-based compound, a cobalt-free lithium nickel-manganese oxide, or a combination thereof.

As an example, a compound represented by any one of the following chemical formulas may be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}CO_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); $Li_aFePO_4$ ($0.90 \leq a \leq 1.8$).

In the chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

For example, the positive electrode active material may be or include a high nickel-based positive electrode active material in which the nickel content is greater than or equal to about 80 mol%, greater than or equal to about 85 mol%, greater than or equal to about 90 mol%, greater than or equal to about 91 mol%, or greater than or equal to about 94 mol%, and less than or equal to about 99 mol%, based on 100 mol% of metal excluding lithium in a lithium transition metal composite oxide. The high-nickel positive electrode active material may achieve high capacity, and may be applied to a high-capacity, high-density rechargeable lithium battery.

An amount of the positive electrode active material may be in a range of about 90 wt% to about 99.5 wt% based on 100 wt% of the positive electrode active material layer, and amounts of the binder and conductive material may be in a range of about 0.5 wt% to about 5 wt%, respectively, based on 100 wt% of the positive electrode active material layer.

The binder improves binding properties of positive electrode active material with one another, and with a current collector. Examples of the binder may include at least one of polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may impart conductivity to the electrode, and any material that does not cause adverse chemical change and that conducts electrons can be used in the battery. Examples of the conductive material may include a carbon-based material such as at least one of natural graphite, artificial graphite, carbon black, acetylene black, Ketjen black, a carbon fiber, a carbon nanofiber, and carbon nanotube; a metal-based material including at least one of copper, nickel, aluminum, silver, and the like, in a form of a metal powder or a metal fiber; a conductive polymer such as a polyphenylene derivative; or a mixture thereof.

The positive electrode current collector may include Al, but is not limited thereto.

## Negative Electrode

The negative electrode for a rechargeable lithium battery includes a current collector, and a negative electrode active material layer on the current collector. The negative electrode active material layer includes a negative electrode active material, and may further include a binder and/or a conductive material.

For example, the negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, for example crystalline carbon, amorphous carbon, or a combination thereof. The crystalline carbon may be graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or **including** at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx ($0 < x \leq 2$), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include at least one of Sn, $SnO_2$, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may attach the negative electrode active material particles to each other, and may also attach the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of

imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material capable of being fibrous, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes an adverse chemical change in the battery. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless-steel foil, a titanium foil, a nickel foam, a copper foam, a polymer substrate coated with a conductive metal, and a combination thereof.

The electrolyte may include an electrolyte solution, a solid electrolyte, or a combination thereof.

The electrolyte solution for a rechargeable lithium battery may include a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethylacetate, methylpropionate, ethylpropionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvent may be used alone, or in a mixture of two or more types of solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent supplies lithium ions in a battery, enables an operation of a rechargeable lithium battery, and improves transportation of the lithium ions between positive and negative electrodes. For example, the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$, x and y are integers in a range of 1 to 20, lithium trifluoromethane sulfonate, lithium tetrafluoroethanesulfonate, lithium difluorobis(oxalato)phosphate (LiDFOB), and lithium bis(oxalato) borate (LiBOB).

## Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as at least one of a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one surface, or on both surfaces, of the porous substrate.

The porous substrate may be or include a polymer film formed of or including any one or more of polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked together.

FIG. 16 is a flow chart illustrating a method of manufacturing an electrode assembly, according to an example embodiment. In FIG. 16, the method 1600 starts with operation 1610, which includes preparing an electrospinning solution including a prepolymer including polyamic acid, a compound represented by Chemical Formula 1, and a solvent. For example, the pre-polymer is included in an amount in a range of about 5 wt% to about 20 wt% based on 100 wt% of the electrospinning solution. In another example, a viscosity of the pre-polymer is in a range of about 9000 mPa·s to about 9900 mPa·s. In a further example, a permittivity of the electrospinning solution is in a range of about 70 pF/m to about 100 pF/m. In yet another example, an electrical conductivity of the electrospinning solution is in a range of about 2000 µS to about 8000 µS. Operation 1620 includes electrospinning the electrospinning solution onto the electrode surface. Operation 1630 includes heat-treating the above electrospinning solution to form a coating layer. For example, the heat-treating is performed at a temperature in a range of about 200 °C to about 400 °C.

Chemical Formula 1:

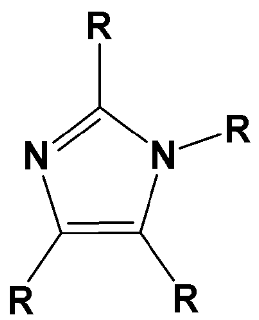

;

In Chemical Formula 1, $R_1$ to $R_4$ each independently includes at least one of hydrogen, a C1 to C20 alkyl group, and a combination thereof. In an example, the compound represented by Chemical Formula 1 is included in an amount in a range of about 0.1 wt% to about 5 wt% based on 100 wt% of the electrospinning solution. In another example, a boiling point of the compound represented by Chemical Formula 1 is greater than about 200 °C and less than or equal to about 400 °C.

Examples and comparative examples of the present disclosure are described below. However, the following examples are only examples of the present disclosure, and the present disclosure is not limited to the following examples.

**Examples:**

**Example 1**

First, 97.5 wt% of artificial graphite, 1.0 wt% of carboxymethyl cellulose, and 1.5 wt% of styrene butadiene rubber (SBR) were mixed in a water solvent to prepare a negative electrode active material slurry. The negative electrode active material slurry was coated, dried, and rolled onto a copper current collector to form a negative electrode active material layer.

Subsequently, an electrospinning solution was prepared by dissolving polyamic acid (a viscosity: 9300 mPa·s, a boiling point: 256 °C) in a dimethylacetate solvent, and then adding imidazole thereto. Herein, based on 100 wt% of the electrospinning solution, 10 wt% of the polyamic acid and 0.5 wt% of the imidazole were included.

Subsequently, the electrospinning solution was electrospun in the form of nanofibers on the surface of the negative electrode active material layer. The electrospinning was performed under the following conditions.

After positioning one nozzle pack consisting of 52 tips with a hole size of 25G and a collector roller at an interval of 15 cm, the electrospinning solution was added to the tips, and then electrospun at 26 °C under relative humidity of 50% by applying a voltage of 40 kV to 50 kV thereto. Herein, the collector roller was set at a speed in a range of 1 m/min to 3 m/min, and the electrospinning solution was set to be discharged from the tips at a solid content of 150 µℓ/min. In addition, the electrospinning was performed by flowing compressed air at a pressure of 0.1 MPa.

Subsequently, thermal imidization was performed at 200 °C to manufacture a negative electrode including a

coating layer (thickness: 8 μm) including a polymer including the polyamic acid and polyimide; and the imidazole and formed on the surface of the negative electrode active material layer.

Based on 100 wt% of the manufactured coating layer, 95 wt% of the polymer (polyamic acid : polyimide = 10:90 in a weight ratio) and 5 wt% of the imidazole were included.

In addition, when the coating layer surface was subjected to SEM image analysis, the nanofibers formed in the coating layer had a 3-dimensional network structure including a plurality of pores, and the pores had an average diameter of 80 nm. In addition, the nanofibers had an average diameter of 80 nm.

## Example 2

A negative electrode including a coating layer (thickness: 8 μm) was manufactured in the same manner as in Example 1, with a difference that the electrospinning solution was prepared by including polyamic acid with a viscosity of 8000 mPa·s.

## Comparative Example 1

A copper current collector and a negative electrode active material layer formed on the copper current collector were prepared in the same manner as in Example 1.

Subsequently, polyamic acid (a viscosity: 9300 mPa·s, a boiling point: 256 °C) was dissolved in a dimethyl acetate solvent to prepare an electrospinning solution. Herein, based on 100 wt% of the electrospinning solution, 10 wt% of the polyamic acid was included.

The electrospinning solution was electrospun in the form of nanofibers on the surface of the negative electrode active material layer under the same condition as in Example 1.

Subsequently, thermal imidization was performed at 200 °C to manufacture a negative electrode including a coating layer (thickness: 8 μm) on the surface of the negative electrode active material layer.

## Comparative Example 2

A copper current collector and or a negative electrode active material layer formed on the copper current collect were prepared in the same manner as in Example 1.

Subsequently, polyacrylonitrile (PAN) and polyvinylidene fluoride (PVDF) were dissolved in a dimethyl acetate solvent to prepare an electrospinning solution. Herein, based on 100 wt% of the electrospinning solution, the polyacrylonitrile and the polyvinylidene fluoride were included in a total amount of 15.8 wt%.

The electrospinning solution was electrospun in the form of nanofibers on the surface of the negative electrode active material layer under the same condition as in Example 1.

Subsequently, thermal imidization was performed at 200 °C to manufacture a negative electrode including a coating layer (thickness: 8 μm) on the surface of the negative electrode active material layer.

## Comparative Example 3

A copper current collector and a negative electrode active material layer formed on the copper current collector were prepared in the same manner as in Example 1.

Subsequently, polyimide was dissolved in a dimethyl acetate solvent to prepare an electrospinning solution. Herein, based on 100 wt% of the electrospinning solution, 25 wt% of the polyimide was included.

The electrospinning solution was electrospun in the form of nanofibers on the surface of the negative electrode active material layer in the same condition as in Example 1 to manufacture a negative electrode including a coating layer (thickness: 8 μm) on the surface of the negative electrode active material layer.

## Comparative Example 4

A negative electrode including a coating layer (thickness: 8 μm) was manufactured in the same manner as in Comparative Example 1, with a difference that the electrospinning solution was prepared by including polyamic acid with a viscosity of 10000 mPa·s.

## Evaluation Examples:

**Evaluation Example** 1: Measurement of permittivity and electrical conductivity according to the amount of imidazole

An electrospinning solution "a" was prepared by dissolving polyamic acid (viscosity: 9300 mPa·s, boiling point: 256 °C) in a dimethyl acetate solvent. In addition, an electrospinning solution "b" was prepared by dissolving polyacrylonitrile (PAN) and polyvinylidene fluoride (PVDF) in a dimethyl acetate solvent.
Each electrospinning solution was measured with respect to permittivity and electrical conductivity, while 0 wt% to 5 wt% of imidazole was added respectively to the electrospinning solutions "a" and "b," and the results are shown in FIGS. 5 and 6.
Referring to FIGS. 5 and 6, the electrospinning solution "a" included polyamic acid having a carboxyl group, wherein as imidazole was more added, the polyamic acid more reacted with the imidazole and more ionized, resultantly improving the permittivity and electrical conductivity of the electrospinning solution.
On the contrary, because polyacrylonitrile (PAN) and polyvinylidene fluoride (PVDF), which were polymers included in the electrospinning solution "b," had no carboxyl group, even though the imidazole was added thereto, there was no change in the permittivity and electrical conductivity of the electrospinning solution.

**Evaluation Example** 2: Evaluation of the correlation between the properties of the electrospinning solution and electrospinning properties

The electrospinning solutions of Examples 1 to 2 and Comparative Examples 1 to 4 were respectively evaluated with respect to permittivity and electrical conductivity, and the results are shown in FIGS. 7 and 8.
As for the permittivity, the higher surface charge density, the better electrospinning properties, and as for the electrical conductivity, the electrospinning properties were particularly desired or improved within the range of 2000 μS to 8000 μS.
Referring to FIG. 7, the electrospinning solution of Comparative Example 1 was confirmed to have lower permittivity of less than 70 pF/m than the permittivity of Example 1, which confirmed that the electrospinning properties were insufficient.
Referring to FIG. 8, the electrospinning solution of Comparative Example 1, compared with the electrospinning solution of Example 1, was confirmed to have low electrical conductivity of less than 2000 μS, resultantly confirming that the electrospinning properties were insufficient.
In addition, Comparative Example 4 exhibited higher viscosity of polyamic acid than Comparative Example 1, and referring to FIGS. 7 and 8, Comparative Example 4 had electrical conductivity not satisfying the optimal range and exhibited lower permittivity than Comparative Example 1, resultantly confirming that the electrospinning properties were deteriorated.
In addition, Example 2 exhibited lower viscosity of polyamic acid than Example 1, wherein Example 2 had higher permittivity than Example 1 but no electrical conductivity within the optimal range, which confirmed that the electrospinning properties were at an average level.

**Evaluation Example** 3: Evaluation of imidization rate (imide index)

The electrospinning solutions of Example 1 and Comparative Example 1 were evaluated with respect to an imidization rate by measuring an imide index according to an imidization temperature.
Specifically, with reference to a sample heat-treated at 350 °C for 1 hour, samples heat-treated at each imidization temperature (25 °C, 140 °C, 200 °C) were subjected to Fourier transform infrared spectroscopy (FT-IR) to calculate an intensity ratio of specific peaks as an imide index, which is shown in FIG. 9.
The imide index is defined according to Equation 1 below.

Equation 1:

$$\text{imide index} = \frac{(D_{1380cm^{-1}}/D_{1500cm^{-1}})_T}{(D_{1380cm^{-1}}/D_{1500cm^{-1}})_{350°C}}.$$

Herein, $D_{1500cm-1}$ is the intensity of a peak corresponding to vibration of benzene, and $D_{1380cm-1}$ is the intensity of a peak corresponding to C-N-C stretching vibration of an imide group.
Referring to FIG. 9, as a result of measuring the imidization index at a low temperature of 200 °C, Example 1, of

which the electrospinning solution included imidazole, was confirmed that an imidization rate increased, compared with Comparative Example 1.

In addition, referring to FIG. 9, the imidization temperature of Example 1 was lower than the imidization temperature of Comparative Example 1, which confirmed that the imidazole served as a low temperature imidization accelerator.

**Evaluation Example 4:** Electrospinning properties test

Scanning electron microscope images (SEM) of the coating layer surfaces on the negative electrodes of Example 1 and Comparative Example 1 were respectively taken, which are shown in FIGS. 10 and 11.

Referring to FIG. 10, in the coating layer of Example 1, the polyimide nanofibers were substantially evenly formed and substantially uniformly distributed, which confirmed desired or improved electrospinning properties.

Referring to FIG. 11, in the coating layer of Comparative Example 1, the polyimide nanofibers were not properly formed, and the solvent of the electrospinning solution was not properly volatilized, which confirmed that the electrospinning properties were much deteriorated.

In addition, the electrospinning solutions of Comparative Example 1 and Example 1 were respectively electrospun onto a silver Al foil with a single nozzle to form coating layers, the images thereof are respectively shown in FIGS. 12 and 13.

In addition, the electrospinning solutions of Comparative Example 1 and Example 1 were respectively electrospun on a black negative electrode plate with multi nozzles to form coating layers, the images thereof are respectively shown in FIGS. 14 and 15.

Referring to FIG. 12 (Comparative Example 1) and FIG. 13 (Example 1), the electrospinning solution of Example 1 had so desired or improved electrospinning properties that nanofibers were substantially evenly coated on the Al foil, which looked white. On the contrary, the electrospinning solution of Comparative Example 1 had so deteriorated electrospinning properties that nanofibers were not properly coated, which looked silver, the color of the Al foil itself.

Referring to FIG. 14 (Comparative Example 1) and FIG. 15 (Example 1), the electrospinning solution of Example 1 had so desired or improved electrospinning properties that nanofibers were substantially evenly coated on the negative electrode plate, which looked white. On the contrary, the electrospinning solution of Comparative Example 1 exhibited so deteriorated electrospinning properties that nanofibers were not properly coated on the negative electrode plate, which looked black, the color of the negative electrode plate itself.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

**1.** An electrode assembly, comprising:

an electrode; and
a coating layer on the electrode;
wherein the coating layer comprises nanofibers,
the nanofibers comprise a polymer comprising at least one of polyamic acid, polyimide, and a combination thereof, and a compound represented by Chemical Formula 1:

Chemical Formula 1:

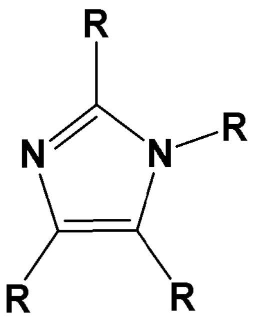

;

wherein, in Chemical Formula 1, $R_1$ to $R_4$ each independently comprises at least one of hydrogen, a C1 to C20 alkyl group, and a combination thereof.

**2.** The electrode assembly as claimed in claim 1, wherein:

the electrode comprises a current collector, and an electrode active material layer on the current collector, and the coating layer is disposed on the electrode active material layer and is integrated with the electrode active material layer.

**3.** The electrode assembly as claimed in claim 1 or 2, wherein the polymer is included in an amount in a range of 90 wt% to 99.9 wt% based on 100 wt% of the coating layer.

**4.** The electrode assembly as claimed in any of the claims 1 to 3, wherein the polyimide is included in an amount greater than or equal to 70 wt% based on 100 wt% of the polymer.

**5.** The electrode assembly as claimed in any of the claims 1 to 4, wherein the compound represented by Chemical Formula 1 comprises at least one of imidazole, 1-methylimidazole, 1-ethylimidazole, 2-methylimidazole, 4-methylimidazole, 1,2-dimethylimidazole, 2-ethyl-4-methylimidazole, and a combination thereof.

**6.** The electrode assembly as claimed in any of the claims 1 to 5, wherein the compound represented by Chemical Formula 1 is included in an amount in a range of 0.1 wt% to 10 wt% based on 100 wt% of the coating layer.

**7.** The electrode assembly as claimed in any of the claims 1 to 6, wherein the polymer and the compound represented by Chemical Formula 1 are included in a weight ratio in a range of 95:5 to 99.9:0.1.

**8.** The electrode assembly as claimed in any of the claims 1 to 7, wherein an average diameter of the nanofibers is in a range of 50 nm to 500 nm.

**9.** The electrode assembly as claimed in any of the claims 1 to 8, wherein:

the nanofibers comprise a plurality of pores: and
an average diameter of the pores is in a range of 50 nm to 500 nm.

**10.** The electrode assembly as claimed in any of the claims 1 to 9, wherein a thickness of the coating layer is in a range of 1 μm to 25 μm.

**11.** A method for manufacturing an electrode assembly, the method comprising:

preparing an electrospinning solution comprising a prepolymer comprising polyamic acid, a compound represented by Chemical Formula 1, and a solvent;
electrospinning the electrospinning solution onto the electrode surface; and
heat-treating the electrospinning solution to form a coating layer;

Chemical Formula 1:

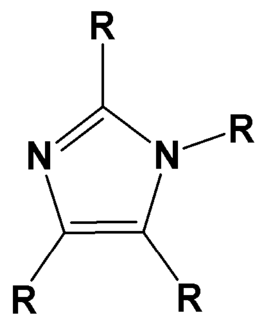

;

wherein, in Chemical Formula 1, $R_1$ to $R_4$ each independently comprises at least one of hydrogen, a C1 to C20 alkyl group, and a combination thereof.

**12.** The method as claimed in claim 11, wherein the pre-polymer is included in an amount in a range of 5 wt% to 20 wt% based on 100 wt% of the electrospinning solution and/or the compound represented by Chemical Formula 1 is included in an amount in a range of 0.1 wt% to 5 wt% based on 100 wt% of the electrospinning solution.

**13.** The method as claimed in claim 11 or 12, wherein a viscosity of the pre-polymer is in a range of 9000 mPa·s to 9900 mPa·s and/or a permittivity of the electrospinning solution is in a range of 70 pF/m to 100 pF/m and/or an electrical conductivity of the electrospinning solution is in a range of 2000 μS to 8000 μS and/or a boiling point of the compound represented by Chemical Formula 1 is greater than 200 °C and less than or equal to 400 °C.

**14.** The method as claimed in any of the claims 11 to 13, wherein the heat-treating is performed at a temperature in a range of 200 °C to 400 °C.

**15.** A rechargeable lithium battery (100) comprising:

an electrode assembly as claimed in any of the claims 1 to 10; and
an electrolyte.

FIG. 1

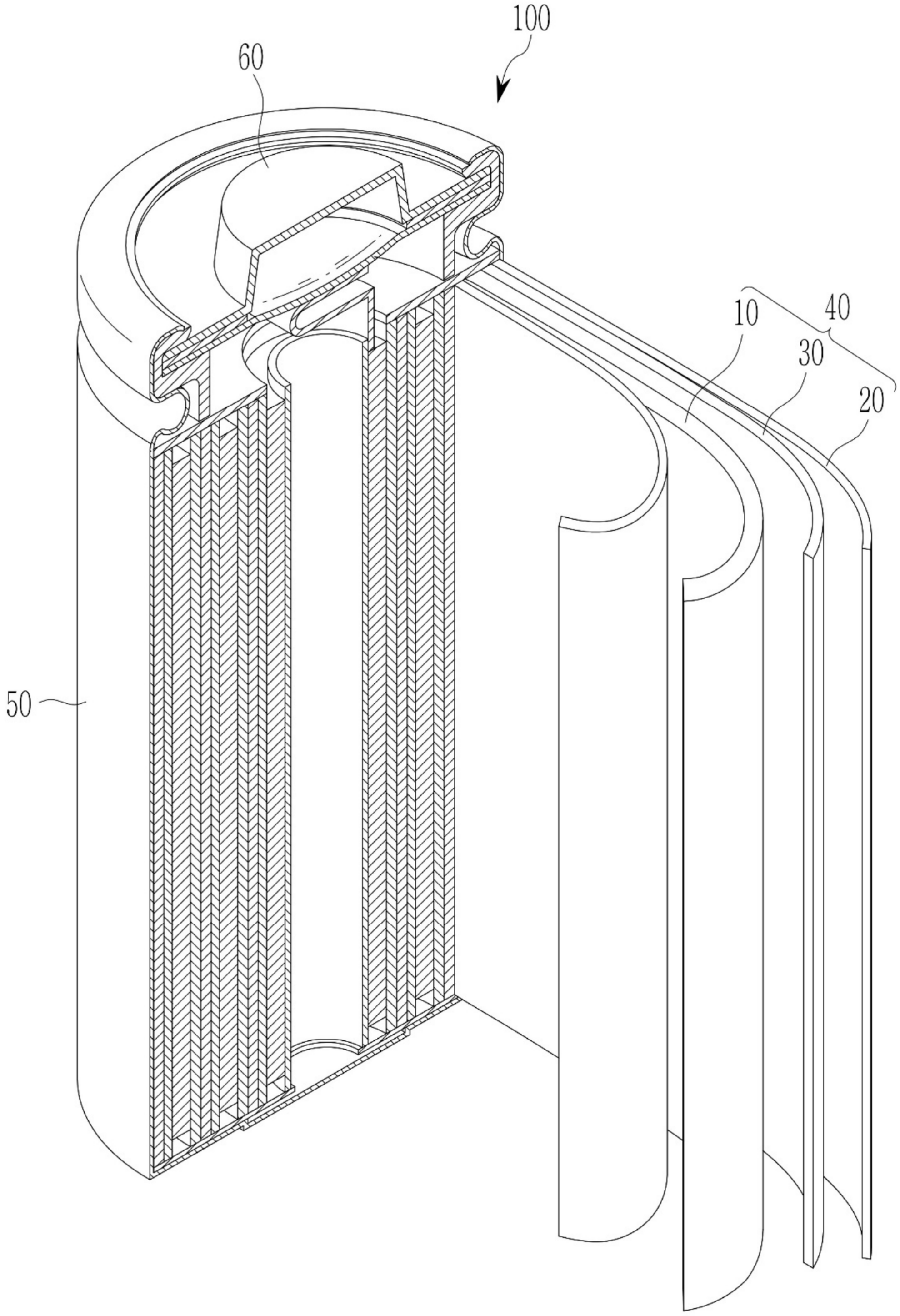

FIG. 2

100

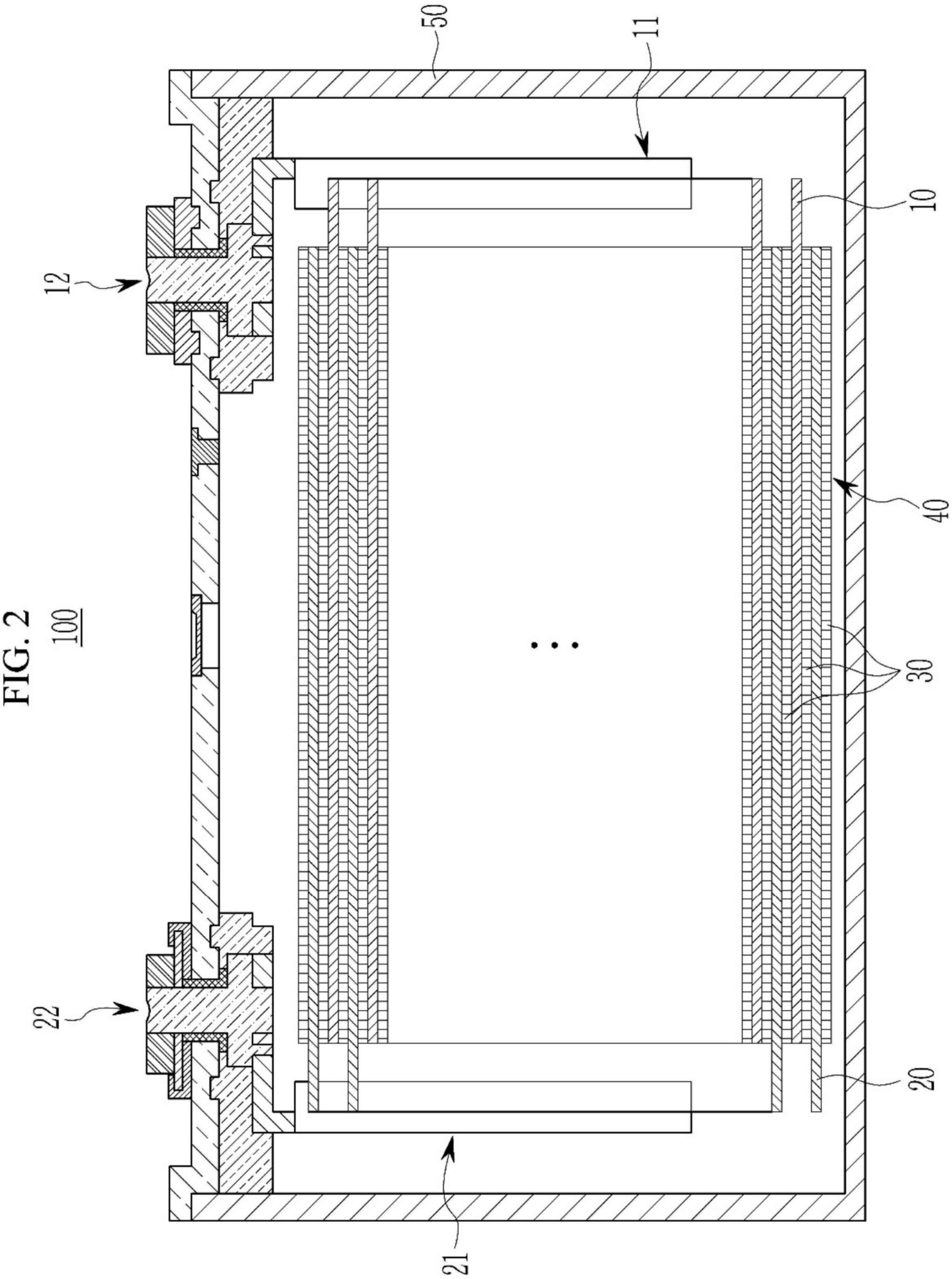

FIG. 3

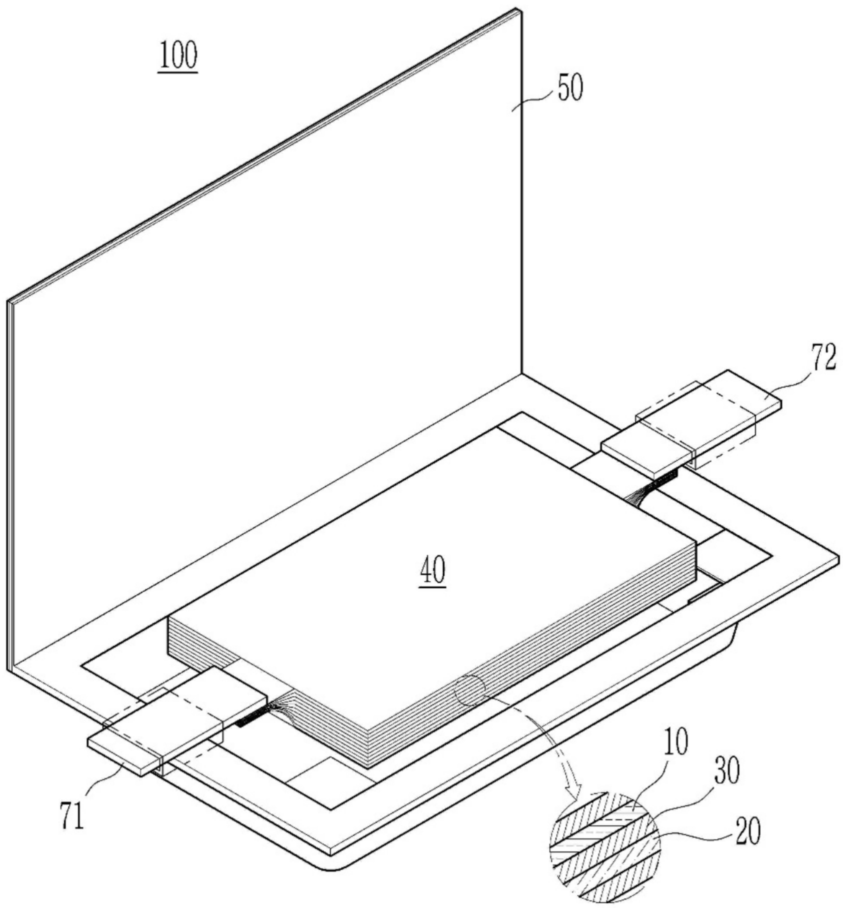

FIG. 4

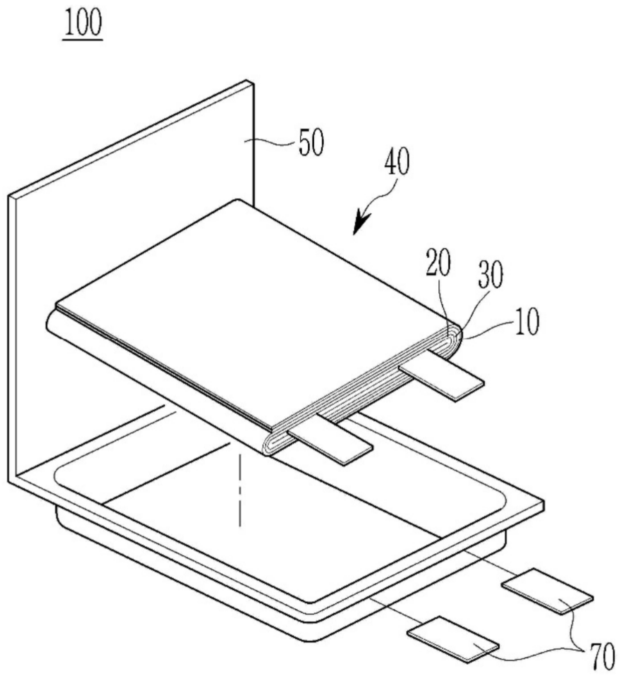

FIG. 5

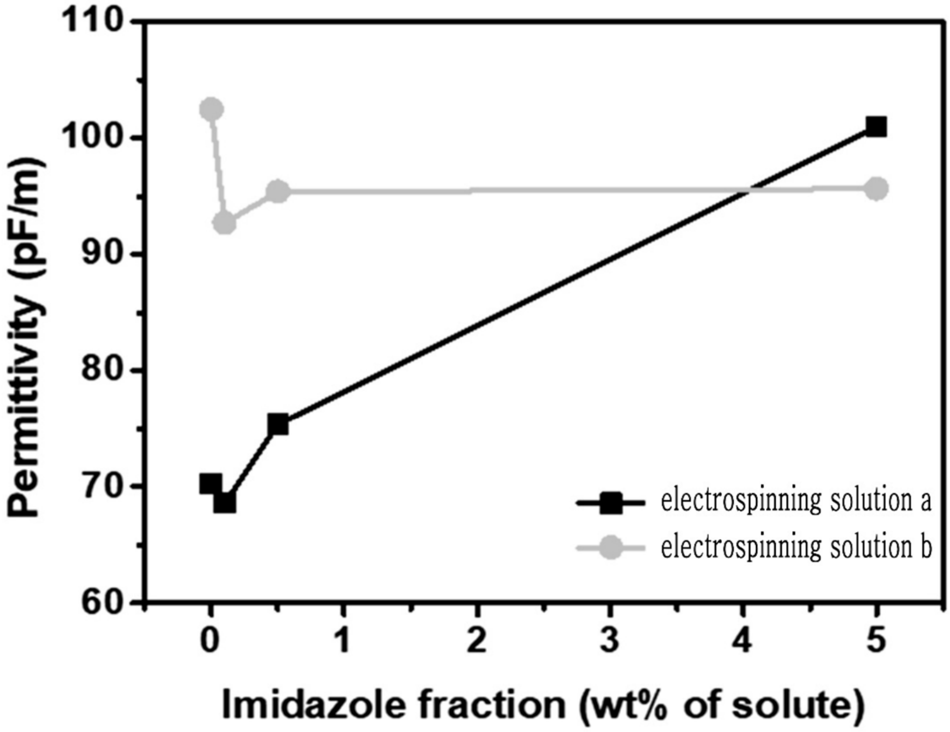
110
100
90
80
70
60
Permittivity (pF/m)
0
1
2
3
4
5
Imidazole fraction (wt% of solute)
electrospinning solution a
electrospinning solution b

FIG. 6

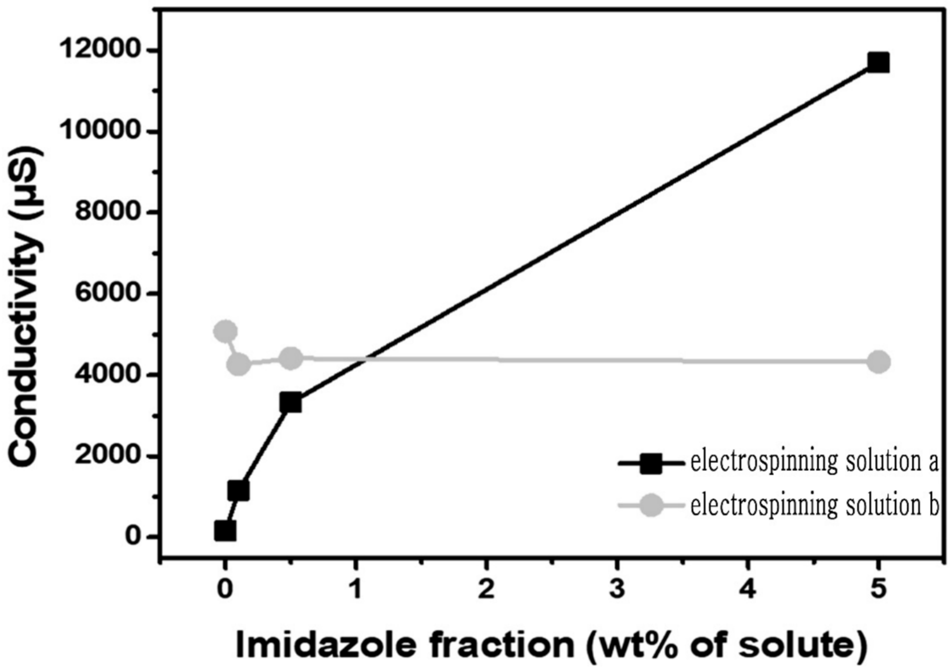
Conductivity (μS)
12000
10000
8000
6000
4000
2000
0
0
1
2
3
4
5
Imidazole fraction (wt% of solute)
electrospinning solution a
electrospinning solution b

FIG. 7

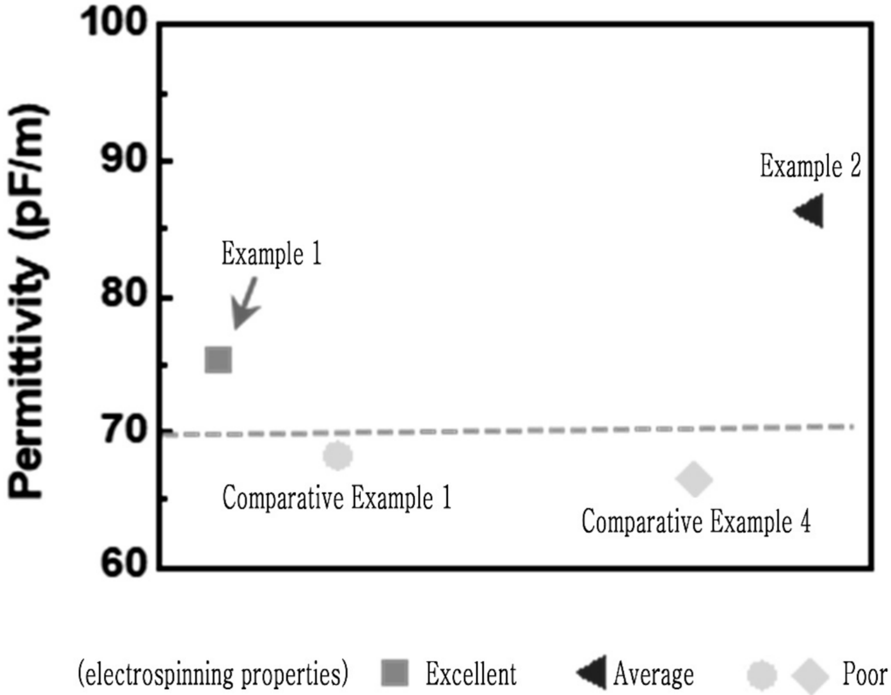
Permittivity (pF/m)
100
90
80
70
60
Example 2
Example 1
Comparative Example 1
Comparative Example 4
(electrospinning properties)
Excellent
Average
Poor

FIG. 8

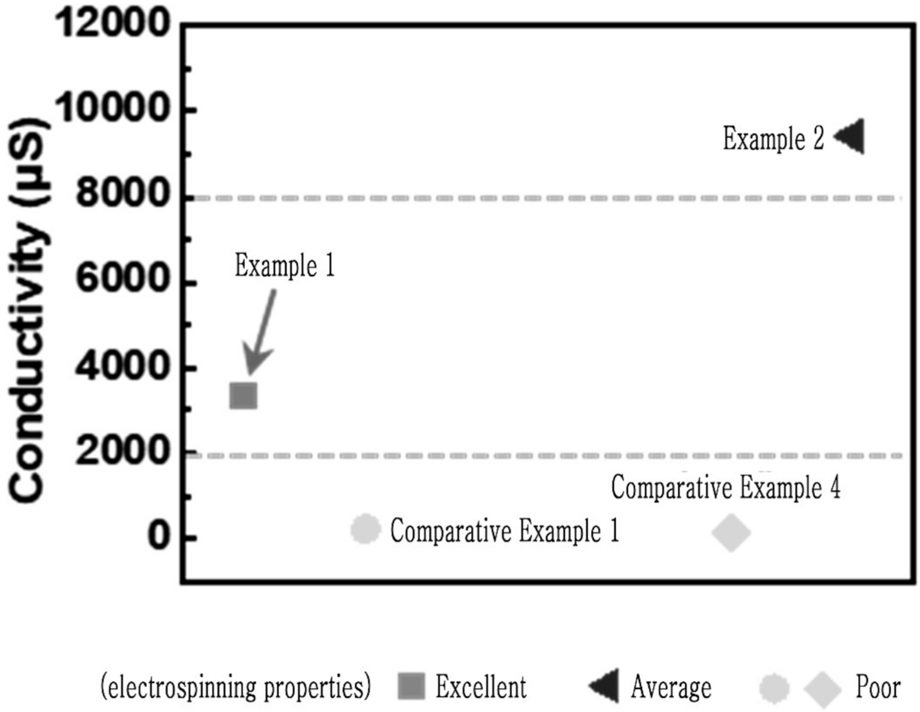
Conductivity (μS)
12000
10000
8000
6000
4000
2000
0
Example 2
Example 1
Comparative Example 4
Comparative Example 1
(electrospinning properties)
Excellent
Average
Poor

FIG. 9

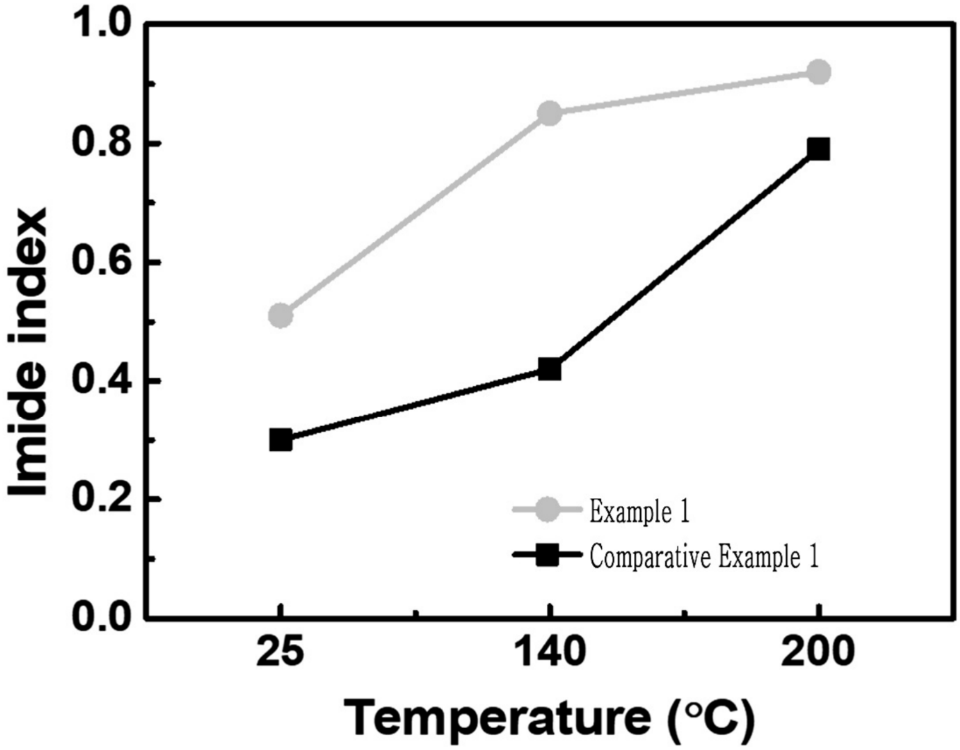
1.0
0.8
0.6
0.4
0.2
0.0
Imide index
Example 1
Comparative Example 1
25
140
200
Temperature (°C)

FIG. 10

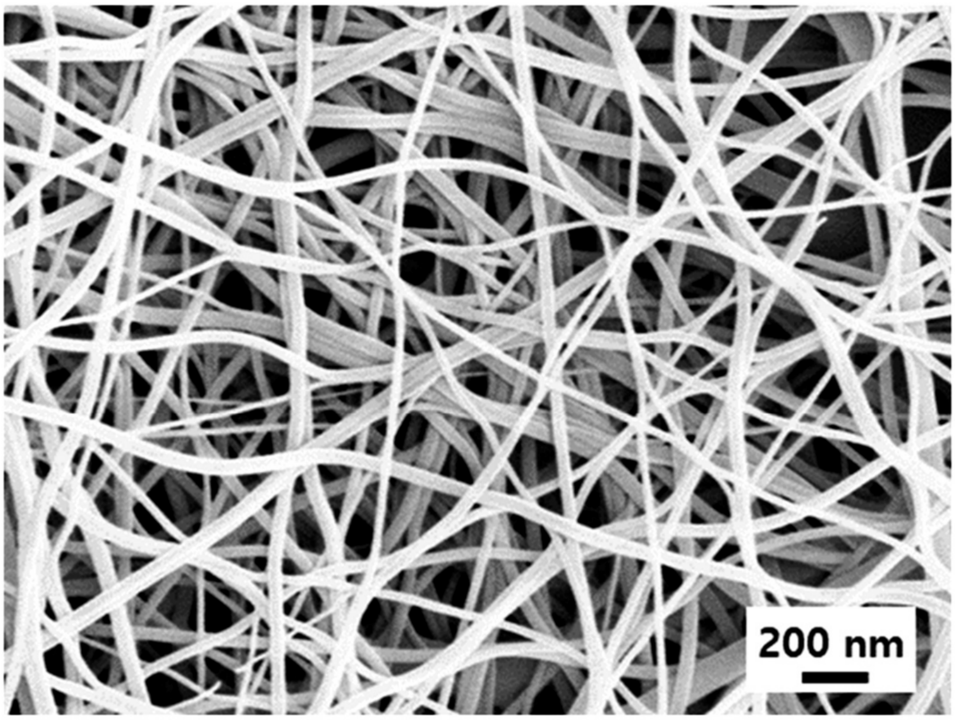

FIG. 11

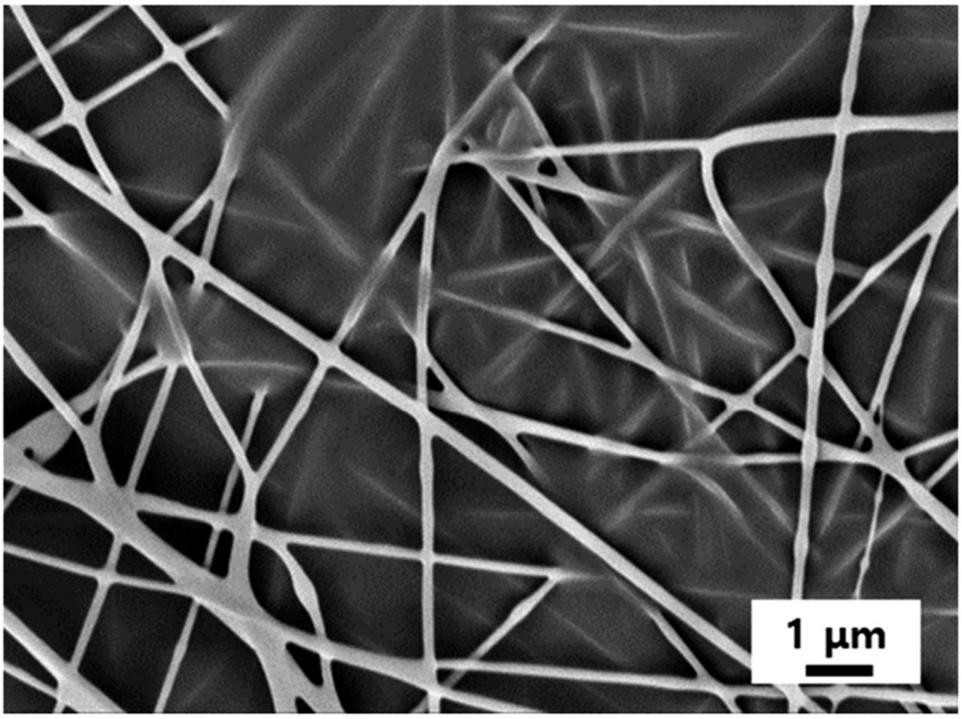

FIG. 12

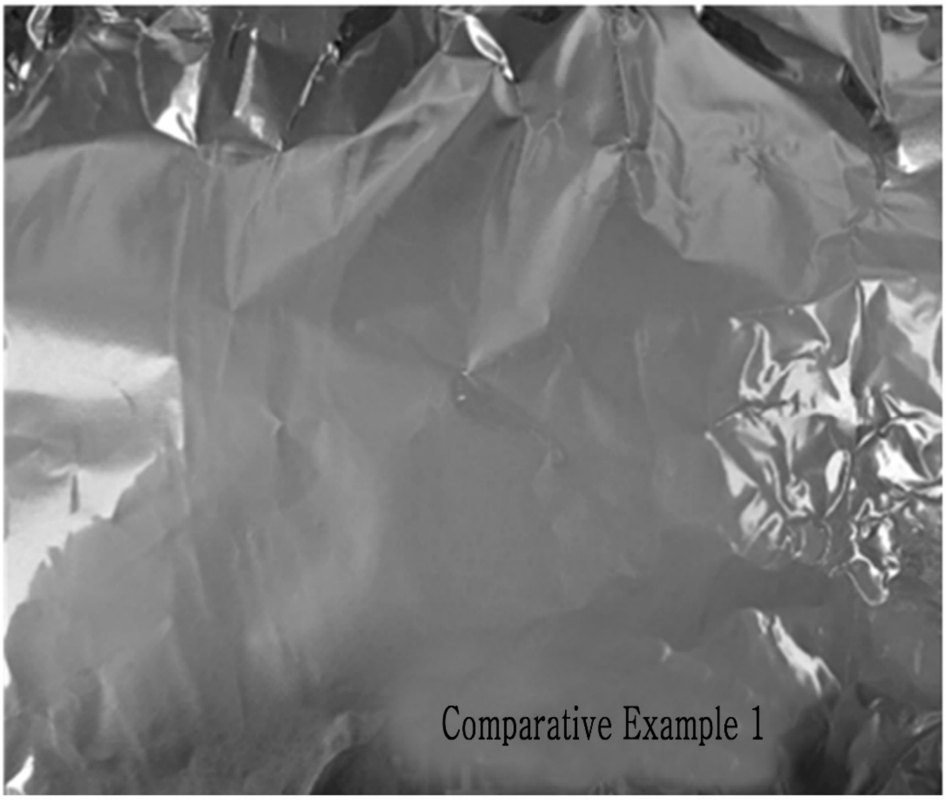

FIG. 13

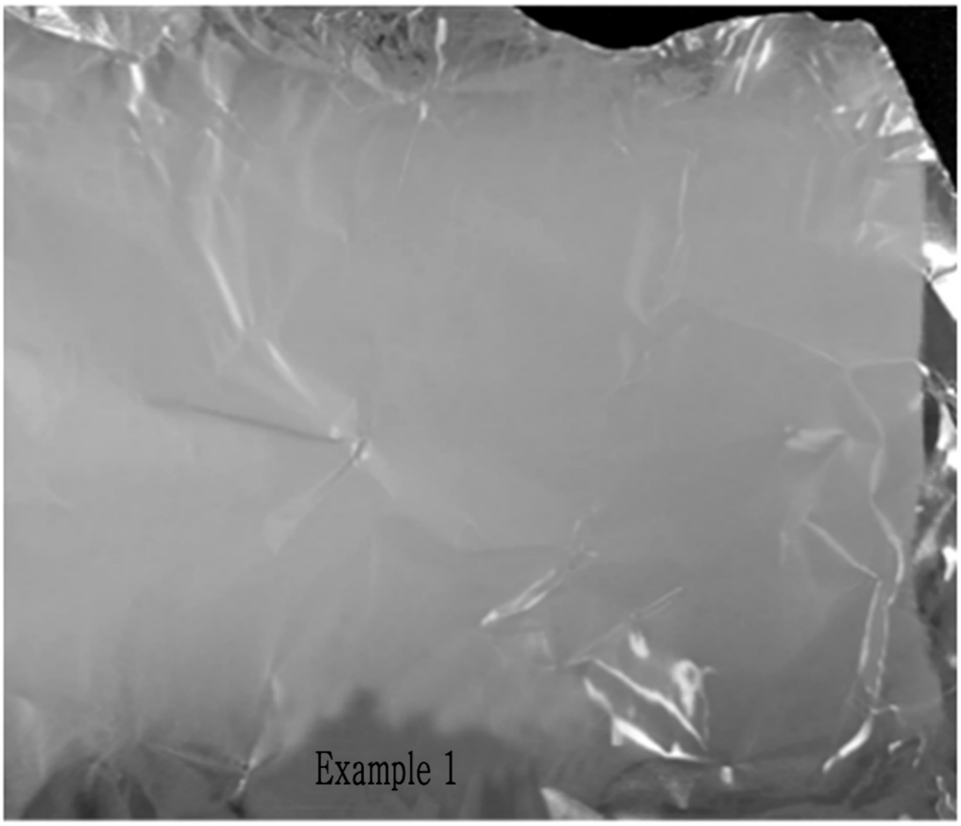

FIG. 14

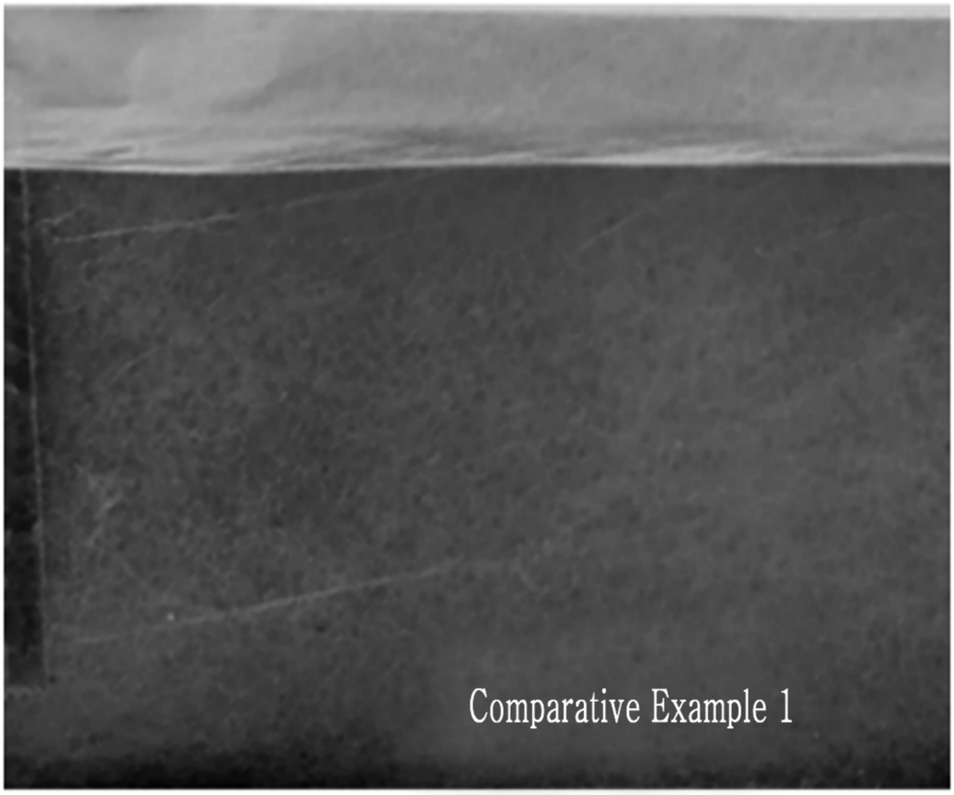

FIG. 15

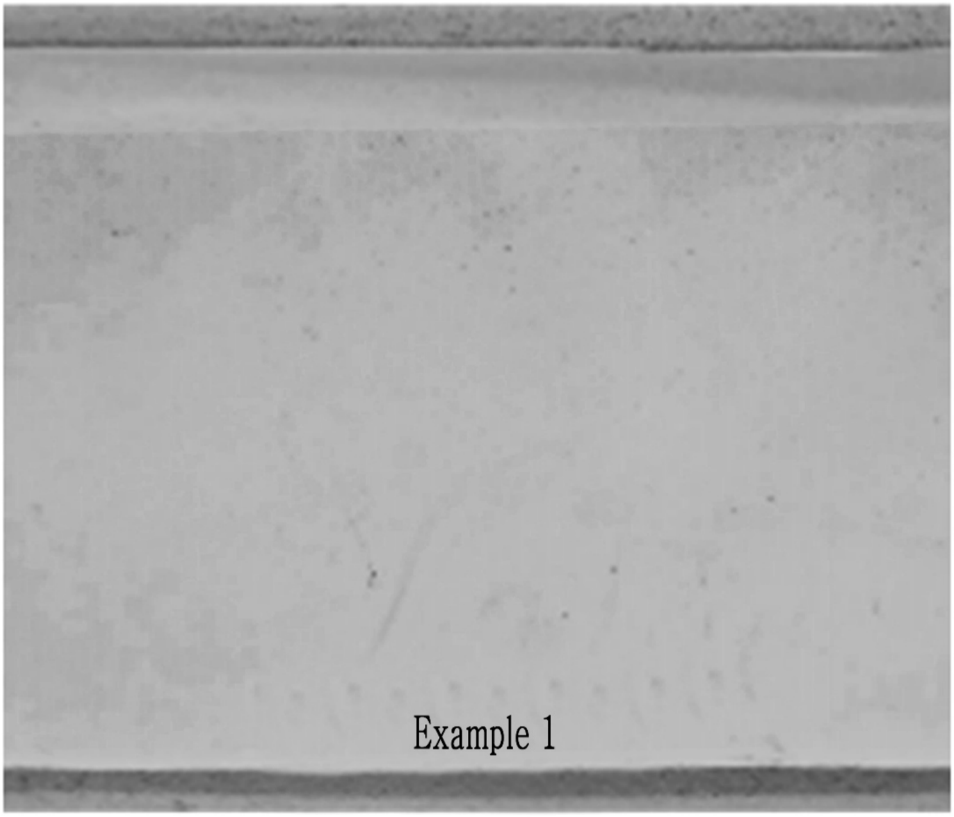

FIG. 16

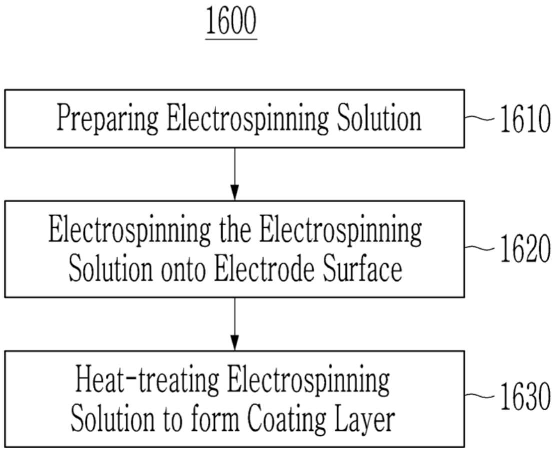
1600
Preparing Electrospinning Solution
1610
Electrospinning the Electrospinning Solution onto Electrode Surface
1620
Heat-treating Electrospinning Solution to form Coating Layer
1630

Europäisches Patentamt
European Patent Office
Office européen des brevets

# EUROPEAN SEARCH REPORT

Application Number
EP 25 22 4678

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2015/186814 A1 (UBE INDUSTRIES [JP]) 10 December 2015 (2015-12-10) * claim 1; examples * ----- | 1-15 | INV. H01M4/04 H01M10/0525 |
| A | US 10 056 614 B2 (UBE INDUSTRIES [JP]) 21 August 2018 (2018-08-21) * claims 1,15,20; examples * ----- | 1-15 | |
| A | KR 2017 0024918 A (UNIST [KR]) 8 March 2017 (2017-03-08) * claims 5,19,21; example 1 * ----- | 1-15 | |

TECHNICAL FIELDS SEARCHED (IPC)

H01M

The present search report has been drawn up for all claims

1

| Place of search | Date of completion of the search | Examiner |
|---|---|---|
| Munich | 5 May 2026 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 22 4678

This annex lists the patent family members relating to the patent documents cited in the above-mentioned European search report. The members are as contained in the European Patent Office EDP file on The European Patent Office is in no way liable for these particulars which are merely given for the purpose of information.

05-05-2026

| Patent document cited in search report | Publication date | Patent family member(s) | Publication date |
|---|---|---|---|
| WO 2015186814 A1 | 10-12-2015 | CN 106463706 A | 22-02-2017 |
| | | EP 3154110 A1 | 12-04-2017 |
| | | JP 6638217 B2 | 29-01-2020 |
| | | JP 2016012561 A | 21-01-2016 |
| | | KR 20170016830 A | 14-02-2017 |
| | | TW 201607115 A | 16-02-2016 |
| | | US 2017194645 A1 | 06-07-2017 |
| | | WO 2015186814 A1 | 10-12-2015 |
| US 10056614 B2 | 21-08-2018 | CN 105580173 A | 11-05-2016 |
| | | EP 3051613 A1 | 03-08-2016 |
| | | JP 6390622 B2 | 19-09-2018 |
| | | JP WO2015046304 A1 | 09-03-2017 |
| | | KR 20160061335 A | 31-05-2016 |
| | | US 2016233513 A1 | 11-08-2016 |
| | | WO 2015046304 A1 | 02-04-2015 |
| KR 20170024918 A | 08-03-2017 | NONE | |

EPO FORM P0459

For more details about this annex : see Official Journal of the European Patent Office, No. 12/82